# EUROPÄISCHE PATENTSCHRIFT

(11) **EP 1 634 675 B1**
(45) Veröffentlichungstag und Bekanntmachung des Hinweises auf die Patenterteilung: **02.04.2008**
(21) Anmeldenummer: 05014243.9
(22) Anmeldetag: 30.06.2005
(51) Int. Cl.: B23Q 1/01, B23Q 11/00

(54) **Werkzeugmaschine mit einem Maschinenfuss**
Machine tool with a machine base
Machine-outil pourvue d'un socle

(30) Priorität: 08.09.2004 DE 102004044098
(43) Veröffentlichungstag der Anmeldung: 15.03.2006
(73) Patentinhaber: Chiron-Werke GmbH & Co. KG, 78532 Tuttlingen (DE)
(72) Erfinder: Schweizer, Anton Richard, 78573 Wurmlingen (DE); Winkler, Hans-Henning, Dr., 78532 Tuttlingen (DE)
(74) Vertreter: Otten, Hajo

(56) Entgegenhaltungen:
- EP-A- 1 122 026
- US-A- 4 955 770
- PATENT ABSTRACTS OF JAPAN Bd. 012, Nr. 336 (M-739), 9. September 1988 (1988-09-09) & JP 63 099153 A (MAZDA MOTOR CORP), 30. April 1988 (1988-04-30)

## Beschreibung

Die vorliegende Erfindung betrifft eine Werkzeugmaschine mit einem Maschinenfuß, einem Arbeitsraum, in dem Werkstücke bearbeitet werden, und einer Vorrichtung, die bei der Bearbeitung der Werkstücke entstehende Späne aus dem Arbeitsraum aufnimmt und weiterleitet, wobei in dem Maschinenfuß zumindest ein zur Aufnahme eines Endes eines Späneförderers vorgesehener Tunnel vorgesehen ist, der sich zumindest bis unter die Öffnung erstreckt und dort nach oben offen ausgebildet ist, und wobei der zumindest eine Tunnel sich in Längsrichtung der Werkzeugmaschine erstreckt und an deren Rückseite eine Öffnung zum Einschieben eines Endes eines Späneförderers aufweist.

Eine derartige Werkzeugmaschine ist aus der US 4,955,770 bekannt.

Aus der EP 0 879 671 A1 oder der DE 197 26 952 A1 bekannte Werkzeugmaschinen weisen einen Maschinenfuß auf, an dem ein Fahrständer in zwei zueinander orthogonalen Richtungen gegenüber einem ebenfalls an dem Maschinenfuß befestigten Werkstücktisch verfahrbar ist. An dem Fahrständer ist höhenverstellbar ein Werkzeugspindelkopf angeordnet, der eine Werkzeugspindel trägt, in die Werkzeuge zum Bearbeiten von auf dem Werkstücktisch aufgespannten Werkstücken eingespannt werden können. Die Bearbeitung der Werkstücke erfolgt in einem Arbeitsraum, der durch eine entsprechende Verkleidung gegenüber den beweglichen Teilen der Werkzeugmaschine abgedichtet ist.

Unterhalb des Arbeitsraumes ist eine so genannte Spänewanne angeordnet, in die über ein schräg verlaufendes Blech die bei der Bearbeitung der Werkstücke entstehenden Späne sowie das zum Kühlen der Werkzeuge sowie Werkstücke in den Arbeitsraum eingesprühte Kühlmittel hineingelangen. Auf diese Weise werben die Späne und das Kühlmittel aus dem Arbeitsraum abgeführt, wobei die beiden Druckschriften es offenlassen, wie die Späne aus der Spänewanne entfernt werden.

Allgemein ist es jedoch bekannt, hinter oder neben derartigen Werkzeugmaschinen so genannte Späneförderer anzuordnen, wie sie beispielsweise in der WO 2004/054756 A1 beschrieben sind. Derartige Späneförderer weisen einen horizontal verlaufenden Förderabschnitt sowie einen schräg nach oben verlaufenden Abschnitt auf, der in einen Späneauswurf mündet. Auf den Förderabschnitt gelangende Späne werden auf diese Weise zu dem höher gelegenen Späneauswurf transportiert, von wo sie in Transportbehälter fallen, die zum Abtransport der Späne dienen.

Damit die Späne aus der Spänewanne auf den Späneförderer gelangen, sind bei der Anmelderin bekannten Werkzeugmaschinen Rutschen vorgesehen, über die die Späne seitlich aus dem Maschinenfuß heraus auf den dort aufgestellten Späneförderer fallen.

Der seitlich neben der Werkzeugmaschine stehende Späneförderer ist auf diese Weise jederzeit für Wartungsmaßnahmen zugänglich, die insbesondere deshalb häufig erforderlich sind, weil sich die Späne miteinander verhaken und den Späneförderer verstopfen, insbesondere wenn dieser zum Transport der Späne eine Transportschnecke einsetzt, wie sie aus der EP 0 417 137 A1 bekannt ist.

Aber auch Späneförderer mit einem Transportband, wie sie in der eingangs erwähnten WO 2004/054756 A1 beschrieben sind, bedürfen einer häufigen Wartung.

Bei derartigen Werkzeugmaschinen wird es allgemein als Nachteil empfunden, dass der für die Aufstellung von Werkzeugmaschinen und Späneförderer erforderliche Platzbedarf relativ groß ist, wobei ferner der Aufbau der Werkzeugmaschine dadurch verkompliziert wird, dass Maßnahmen bereitgestellt werden müssen, um die Späne aus der Spänewanne zu dem Späneförderer zu transportieren.

Bei derartigen Werkzeugmaschinen, wo der Späneförderer an einer Seite der Werkzeugmaschine angeordnet ist, wird der Schaltschrank, der die elektrische und pneumatische Steuerung für die Werkzeugmaschine aufnimmt, an der Rückseite der Werkzeugmaschine angeordnet. Da der Schaltschrank jederzeit zugänglich sein muss, ist es bei derartigen Werkzeugmaschinen dann nicht möglich, den Späneförderer hinter der Werkzeugmaschine anzuordnen, obwohl dies aus Platzgründen häufig wünschenswert wäre.

Als weiterer Nachteil wird bei aus dem Stand der Technik bekannten Werkzeugmaschinen sowie zugeordneten Späneförderern die Tatsache empfunden, dass in der Regel jeder Werkzeugmaschine ein eigener Späneförderer zugeordnet werden muss, oder aber dass komplizierte Transportbahnen zum Abtransport der Späne eingesetzt werden müssen, wie dies in der eingangs erwähnten EP 0 417 137 A1 ausführlich beschrieben ist.

Aus der US 4,955,770 ist eine Werkzeugmaschine bekannt, bei der ein Späneförderer entweder von hinten oder seitlich unter das Maschinenbett geschoben wird, wobei ein quer durch das Maschinenbett verlaufender Tunnel vorgesehen ist.

Vor diesem Hintergrund liegt der vorliegenden Erfindung die Aufgabe zugrunde, die eingangs erwähnte Werkzeugmaschine derart weiterzubilden, dass eine größere Flexibilität bei der Anordnung des Späneförderers möglich ist, ohne dass der Platzbedarf für die Aufstellung von Werkzeugmaschine und Späneförderer erhöht wird.

Bei der eingangs erwähnten Werkzeugmaschine wird diese Aufgabe erfindungsgemäß dadurch gelöst, dass an der Rückseite der Werkzeugmaschine ein Schaltschrank angeordnet ist, der die Öffnung des Tunnels von oben U-förmig übergreift.

Die der Erfindung zugrunde liegende Aufgabe wird auf diese Weise vollkommen gelöst.

Überraschenderweise beeinträchtigt ein derartiger Tunnel in dem Maschinenfuß die Standfestigkeit und damit die mit der Werkzeugmaschine erzielbare Bearbeitungsgenauigkeit nicht in dem Maße, wie dies ursprünglich befürchtet wurde. Es ist also möglich, in dem Maschinenfuß einen bis unter den Arbeitsraum führenden Tunnel vorzusehen, der nach oben eine in den Arbeitsraum weisende Öffnung aufweist, durch die Späne unmittelbar auf den Förderabschnitt eines eingeschobenen Späneförderers fallen können.

Auf diese Weise ist der Aufbau der neuen Werkzeugmaschine sehr einfach, die Vorrichtung zum Abführen von Spänen aus dem Arbeitsraum besteht im Wesentlichen aus der unten im Arbeitsraum vorgesehenen Öffnung sowie ggf. schräg angeordneten Leitblechen für herunterfallende Späne.

Da sich der Späneförderer jetzt größtenteils in dem Maschinenfuß der Werkzeugmaschine befindet, ist der gesamte Platzbedarf zum Aufstellen von Werkzeugmaschine und Späneförderer geringer als wenn der Späneförderer komplett neben der Werkzeugmaschine stehen würde.

Der Späneförderer wird von hinten in die Werkzeugmaschine eingeschoben, so dass seitlich neben der Werkzeugmaschine überhaupt kein Platz für einen Späneförderer vorgesehen, werden muss.

Dabei ist von Vorteil, dass der Schaltschrank an der Rückseite der Werkzeugmaschine verbleiben kann. Der Tunnel erstreckt sich jetzt sozusagen auch noch durch den Schaltschrank hindurch, der zu diesem Zweck wie ein nach unten offenes U ausgebildet ist.

Auf diese Weise kann der in dem Schaltschrank zur Verfügung stehende Platz für die Steuergeräte verringert sein, was aber kein größeres Problem darstellt, da einige der Steuergeräte auch anderweitig im Gehäuse der Werkzeugmaschine angeordnet sein können.

Der Späneförderer kann auch jederzeit aus dem Tunnel herausgezogen werden, um erforderliche Wartungsarbeiten vorzunehmen. Da der Späneförderer nicht fest mit der Werkzeugmaschine verschraubt ist, lässt sich dies problemlos bewerkstelligen wobei der zum Herausziehen des Späneförderers benötigte Platzbedarf durch entsprechende Anordnung von zwei Werkzeugmaschinen so ausgewählt sein kann, dass der entsprechende Platzbedarf von zwei oder sogar mehr Werkzeugmaschinen alternierend genutzt werden kann.

Allgemein ist es bevorzugt, wenn der zumindest eine Tunnel sich trichterförmig zu der Öffnung hin erweitert.

Bei dieser Maßnahme ist von Vorteil, dass der zum Herausziehen und Einschieben des Späneförderers neben oder hinter der Werkzeugmaschine benötigte Platz weiter verringert wird, denn der Späneförderer kann schräg aus dem Maschinenfuß herausgezogen werden, wozu ein Platz benötigt wird, der geringer ist, als wenn der Späneförderer senkrecht zur Werkzeugmaschine herausgezogen würde.

Allgemein ist es noch bevorzugt, wenn der zumindest eine Tunnel zumindest abschnittsweise nach unten offen ausgebildet ist.

Bei dieser Maßnahme ist von Vorteil, dass übliche Späneförderer, die mit Rollen versehen sind, mit denen sie auf dem Untergrund verfahren werden können, ohne konstruktive Änderungen verwendet werden können, um in die Tunnel der neuen Werkzeugmaschine eingeschoben zu werden. Der Tunnel führt dabei das innere Ende des Späneförderers, so dass es automatisch, also ohne Justierarbeit, unter der Öffnung zu dem Arbeitsraum zu liegen kommt.

Besonders bevorzugt ist es in diesem Zusammenhang, wenn ein weiterer Tunnel vorgesehen ist, der sich quer durch den Maschinenfuß erstreckt.

Auf diese Weise ist es wahlweise möglich, einen Späneförderer von links oder rechts oder von hinten in die neue Werkzeugmaschine einzuschieben, so dass die Werkzeugmaschine für unterschiedliche Platzvorgaben ausgerüstet ist.

Versuche in den Räumen der Anmelderin haben ergeben, dass auch ein mit derartigen Tunneln ausgerüsteter Maschinenfuß noch derart stabil ist, dass die Bearbeitungsgenauigkeit der auf diesen Maschinenfuß aufgebauten Werkzeugmaschine auch größten Anforderungen genügt.

Allgemein ist es dabei bevorzugt, wenn die Werkzeugmaschine zumindest eine Werkzeugspindel zur Aufnahme der Werkzeuge und einen Werkstücktisch zum Aufspannen der Werkstücke aufweist, wobei die zumindest eine Werkzeugspindel und der Werkstücktisch relativ zueinander verfahrbar sind, wobei vorzugsweise die zumindest eine Werkzeugspindel über eine Verfahreinrichtung auf dem Maschinenfuß gelagert ist.

Die Erfinder der vorliegenden Anmeldung haben erkannt, dass insbesondere bei einer derartigen "Fahrständermaschine" sowohl der quer verlaufende als auch der längs zur Rückseite verlaufende Tunnel vorgesehen werden können, ohne dass die Bearbeitungsgenauigkeit einer derartigen Werkzeugmaschine leidet.

Weitere Vorteile ergeben sich aus der Beschreibung und der beigefügten Zeichnung.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht einer erfindungsgemäßen Werkzeugmaschine;
- Fig. 2: eine perspektivische Darstellung einer erfindungsgemäßen Werkzeugmaschine; und
- Fig. 3: eine Draufsicht auf einen schematisch dargestellten Maschinenfuß, wie er bei den Werkzeugmaschinen aus Fig. 1 und Fig. 2 verwendet werden kann.

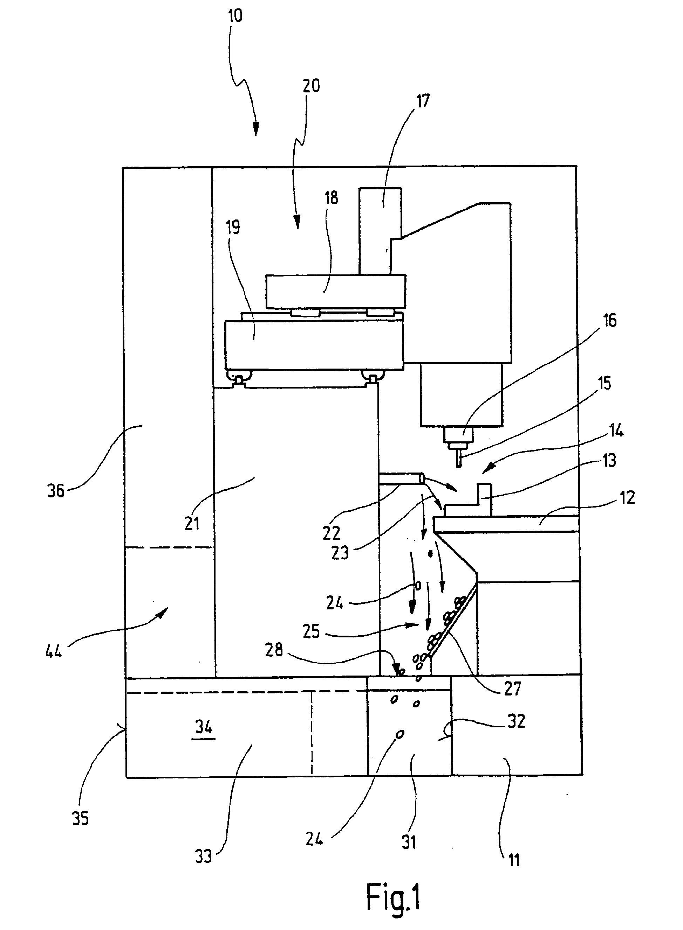

In Fig. 1 ist mit 10 eine Werkzeugmaschine bezeichnet, die in schematischer Seitenansicht gezeigt ist. Die Werkzeugmaschine 10 umfasst einen Maschinenfuß 11, auf dem vorne ein Werkstücktisch 12 angeordnet ist, auf dem ein Werkstück 13 aufgespannt ist, das in einem Arbeitsraum 14 bearbeitet wird.

Die Bearbeitung des Werkstückes 13 erfolgt mittels eines Werkzeuges 15, das von einer Werkzeugspindel 16 getragen wird. Die Werkzeugspindel 16 ist in an sich bekannter Weise über einen Spindelkopf höhenverstellbar an einem Fahrständer 17 gelagert, der wiederum auf einem ersten Schlitten 18 sitzt, der in Fig. 1 in der Zeichenebene waagerecht verfahrbar ist. Der erste Schlitten 18 sitzt auf einem zweiten Schlitten 19, der senkrecht zu der Zeichenebene der Fig. 1 verfahren werden kann.

Der Fahrständer 17 sowie die Schlitten 18 und 19 bilden eine Verfahreinrichtung 20, mit der das Werkzeug 15 gegenüber dem Werkstück 13 in dem Arbeitsraum 14 verfahren werden kann.

Es sei noch erwähnt, dass der Schlitten 19 über ein Gestellteil 21 mit dem Maschinenfuß 11 verbunden ist.

Während der Bearbeitung des Werkstückes 13 mit dem Werkzeug 15 wird aus einem schematisch angedeuteten Spülrohr Kühlmittel 23 in den Arbeitsraum 14 abgegeben, um das Werkstück 13 und das Werkzeug 15 zu kühlen und entstehende Späne 24 abzuspülen, so dass sie nach unten in eine Vorrichtung 25 fallen, die ein schräg angeordnetes Blech 27 umfasst, durch das die Späne über eine Öffnung 28 nach unten aus dem Arbeitsraum 14 herausfallen.

Unter der Öffnung 28 ist ein sich quer durch die Werkzeugmaschine 10 erstreckender Tunnel 31 vorgesehen, der eine Öffnung 32 aufweist, die in der Fig. 1 erkennbar ist.

In dem Maschinenfuß 11 erstreckt sich ferner ein weiterer Tunnel 33 von der Öffnung 28 nach hinten, wo er sich in seinem hinteren Abschnitt 34 trichterförmig zu einer Öffnung 35 erweitert.

An der Rückseite der Werkzeugmaschine 10 ist noch ein Schaltschrank 36 angeordnet, unter dem der Tunnel 33 hindurch verläuft.

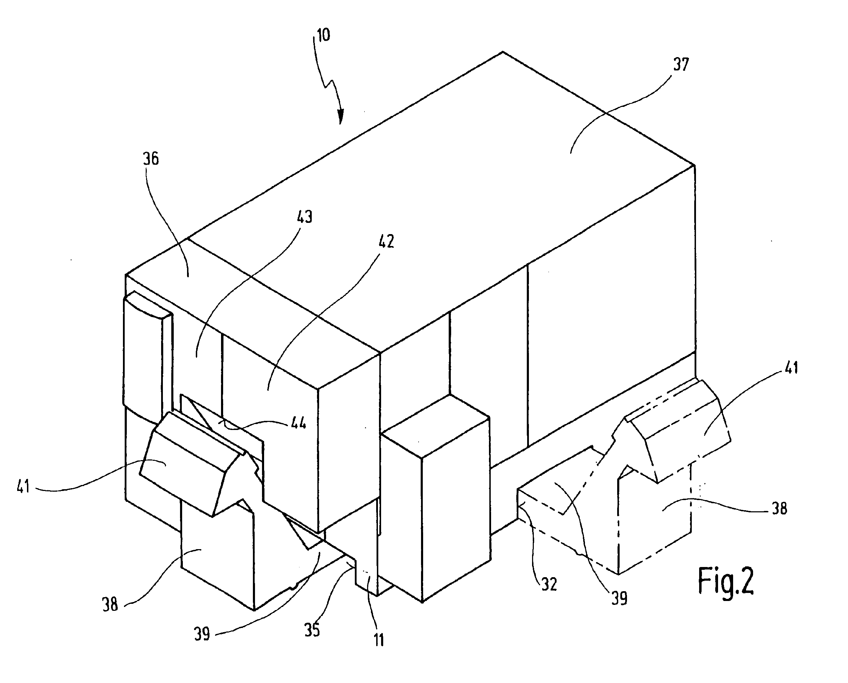

Sowohl in den Tunnel 31 als auch in den Tunnel 33 kann jetzt ein Späneförderer eingeschoben werden, wie dies jetzt anhand der perspektivischen Darstellung der Fig. 2 erläutert wird.

In Fig. 2 ist die Werkzeugmaschine 10 lediglich schematisch gezeigt, im Wesentlichen ist ihr Gehäuse 37 sowie der Schaltschrank 36 zu erkennen.

In die Öffnung 35 ist ein bei 38 angedeuteter Späneförderer geschoben, dessen Förderabschnitt 39 in den Tunnel 33 hinein unter die Öffnung 28 reicht. An den Förderabschnitt 39 schließt sich bei dem Späneförderer 38 ein höher gelegener Späneauswurf 41 an, aus dem die durch die Öffnung 28 auf das Förderende 39 gefallenen und zum Späneauswurf 41 transportierten Späne in einen in der Zeichnung nicht dargestellten Transportbehälter fallen.

In Fig. 2 ist ferner zu erkennen, dass der Schaltschrank 36 zwei Türen 42, 43 aufweist und insgesamt die Form eines nach unten offenen U aufweist, so dass sich ein Freiraum 44 bildet, der auch in Fig. 1 schematisch angedeutet ist.

Durch diese Anordnung ist es möglich, die Türen 42, 43 auch dann zu öffnen, wenn der Späneförderer 38 in den Tunnel 33 eingeschoben ist.

Wie es in Fig. 2 strichpunktiert angedeutet ist, kann der Späneförderer 38 auch seitlich durch die Öffnung 32 in den Tunnel 31 eingeschoben werden, wenn die Platzverhältnisse dies erforderlich machen.

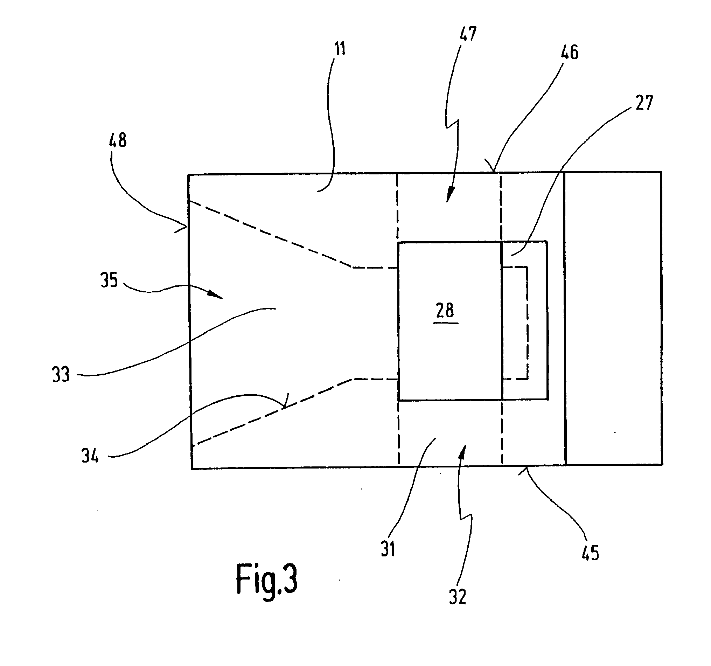

In Fig. 3 ist der Maschinenfuß 11, wie er bei den Werkzeugmaschinen 10 aus den Fig. 1 und 2 verwendet wird, in einer schematischen Draufsicht dargestellt.

Es ist zu erkennen, dass der Tunnel 31 den Maschinenfuß 11 quer durchläuft und mit seiner Öffnung 32 in einer Längsseite 45 liegt, während er an der gegenüberliegenden Längsseite 46 eine Öffnung 47 aufweist. Auf diese Weise ist es möglich, einen Späneförderer von links oder von rechts in den Maschinenfuß 11 hineinzuschieben oder nebeneinanderstehende Werkzeugmaschinen 10 so zu verketten, dass ihre Späne gemeinsam seitlich durch die Tunnel 31 abtransportiert werden.

Schließlich ist noch zu erkennen, dass sich der Tunnel 33 mit seinem hinteren Abschnitt 34 trichterförmig zu der in der Rückwand 48 vorgesehenen Öffnung 35 erweitert. Auf diese Weise ist es möglich, den Späneförderer 38 nicht nur in Längsrichtung der Werkzeugmaschine 10 sondern auch schräg dazu aus dem Maschinenfuß 11 herauszuziehen, so dass der Platzbedarf zum Herausziehen des Späneförderers 38 geringer ist als wenn er gerade herausgezogen werden müsste.

Selbstverständlich ist es auch möglich, den Tunnel 31 zu den Öffnungen 32 und 47 hin trichterförmig zu erweitern.

Sowohl der Tunnel 31 als auch der Tunnel 33 sind nach unten offen, so dass der Späneförderer 38 mit seinen auf dem Untergrund laufenden Rollen unmittelbar in die Werkzeugmaschine 10 eingeschoben werden kann, wo sein inneres Ende durch die Tunnel 31, 33 unter der Öffnung 28 zentriert wird.

## Patentansprüche

1. Werkzeugmaschine mit einem Maschinenfuß (11), einem Arbeitsraum (14), in dem Werkstücke (13) bearbeitet werden, und einer Vorrichtung (25), die bei der Bearbeitung der Werkstücke (13) entstehende Späne (24) aus dem Arbeitsraum (14) aufnimmt und weiterleitet, wobei in dem Maschinenfuß (11) zumindest ein zur Aufnahme eines Endes (39) ein zu Späneförderers (38) vorgesehener Tunnel (33) vorgesehen ist, der sich zumindest bis unter die Vorrichtung (25) streckt und dort nach oben offen (28) ausgebildet ist, und wobei der zumindest eine Tunnel (33) sich in Längsrichtung der Werkzeugmaschine (10) erstreckt und an deren Rückseite (48) eine Öffnung (35) zum Einschieben eines Endes (39) eines Späneförderers (38) aufweist,
**dadurch gekennzeichnet, dass** an der Rückseite (48) ein Schaltschrank (36) angeordnet ist, der die Öffnung (3p) von oben U-förmig (44) übergreift.

2. Werkzeugmaschine nach Anspruch 1, **dadurch gekennzeichnet, dass** der zumindest eine Tunnel (33) sich trichterförmig (34) zu der Öffnung (35) hin erweitert.

3. Werkzeugmaschine nach Anspruch 1 oder 2, **dadurch gekennzeichnet, dass** der zumindest eine Tunnel (31, 33) zumindest abschnittsweise nach unten offen ausgebildet ist.

4. Werkzeugmaschine nach einem der Ansprüche 1 bis 3, **dadurch gekennzeichnet, dass** die zumindest eine Werkzeugspindel (16) zur Aufnahme der Werkzeuge (15) und einen Werkstücktisch (12) zum Aufspannen der Werkstücke (13) aufweist, wobei die zumindest eine Werkzeugspindel (16) und der Werkstücktisch (12) relativ zueinander verfahrbar sind.

5. Werkzeugmaschine nach Anspruch 4, **dadurch gekennzeichnet, dass** die zumindest eine Werkzeugspindel (16) über eine Verfahreinrichtung (20) auf dem Maschinenfuß (11) gelagert ist.

6. Werkzeugmaschine nach einem der Ansprüche 1 bis 5, **dadurch gekennzeichnet, dass** ein weiterer Tunnel (31) vorgesehen ist, der sich quer durch den Maschinenfuß (11) erstreckt und an beiden Längsseiten (45, 46) der Werkzeugmaschine (10) jeweils eine Öffnung (32, 47) zum Einschieben eines Endes (39) eines Späneförderers (38) aufweist.

## Claims

1. A machine tool having a machine base (11), a working area (14), in which workpieces (13) are machined, and a device (25), which device receives chips (24) formed during machining of the workpieces (13) from the working area (14) and conveys them onward, wherein at least one tunnel (33) for receiving one end (39) of a chip conveyor (38) is provided in the machine base (11), which tunnel extends at least to below the device (25) and is there of upwardly open (28) design, and whereby the at least one tunnel (33) extends in the longitudinal direction of the machine tool (10) and has at the rear side (48) of the latter an opening (35) for pushing in one end (39) of a chip conveyor (38), **characterized in that** a switch cabinet (36), which extends over the opening (35) in a U-shape (44) from above, is arranged on the rear side (48).

2. The machine tool of claim 1, **characterized in that** the at least one tunnel (33) widens in a funnel-shape (34) toward the opening (35).

3. The machine tool of claim 1 and 2, **characterized in that** the at least one tunnel (31, 33) is of downwardly open design at least in portions.

4. The machine tool of anyone of claims 1 to 3, **characterized in that** the machine tool has at least one tool spindle (16) for receiving the tools (15) and a workpiece table (12) for clamping the workpieces (13), the at least one tool spindle (16) and the workpiece table (12) being movable relative to one another.

5. The machine tool of claim 4, **characterized in that** the at least one tool spindle (16) is mounted on the machine base (11) via a traversing apparatus (20).

6. The machine tool of anyone of claims 1 to 5, **characterized in that** a further tunnel (31) is provided, which extends transversely through the machine base (11) and has an opening (32, 47) on each of the two longitudinal sides (45, 46) of the machine tool (10) for pushing in one end (39) of a chip conveyor (38).

## Revendications

1. Machine-outil pourvue d'un socle (11), d'un espace de travail (14), dans lequel des pièces (13) sont usinées, et d'un dispositif (25) qui reçoit et transmet des copeaux (24) apparaissant lors de l'usinage des pièces (13) depuis l'espace de travail (14), au moins un tunnel (33) prévu pour recevoir une extrémité (39) d'un convoyeur de copeaux (38) étant prévu dans le socle (11), lequel tunnel s'étend au moins jusqu'au-dessous du dispositif (25) et y est réalisé ouvert (28) vers le haut, et au moins le tunnel (33) s'étendant dans le sens longitudinal de la machine-outil (10) et présentant sur sa face arrière (48) un orifice (35) en vue de l'introduction d'une extrémité (39) d'un convoyeur de copeaux (38),
**caractérisée en ce qu'**une armoire électrique (36) est disposée sur la face arrière (48), laquelle recouvre l'orifice (35) par le dessus en forme de U (44).

2. Machine-outil selon la revendication 1, **caractérisée en ce qu'**au moins le tunnel (33) s'élargit en forme d'entonnoir (34) vers l'orifice (35).

3. Machine-outil selon la revendication 1 ou 2, **caractérisée en ce qu'**au moins le tunnel (31, 33) est réalisé au moins par endroits ouvert vers le bas.

4. Machine-outil selon l'une quelconque des revendications 1 à 3, **caractérisée en ce qu'**elle présente au moins une broche d'outil (16) pour recevoir les outils (15) et un plateau porte-outils (12) pour serrer les outils (13), au moins la broche d'outil (16) et le plateau porte-outils (12) pouvant être déplacés l'un par rapport à l'autre.

5. Machine-outil selon la revendication 4, **caractérisée en ce qu'**au moins la broche d'outil (16) est logée par le biais d'un dispositif de déplacement (20) sur le socle (11).

6. Machine-outil selon l'une quelconque des revendications 1 à 5, **caractérisée en ce qu'**un autre tunnel (31) est prévu, lequel s'étend transversalement au travers du socle (11) et présente sur les deux côtés longitudinaux (45, 46) de la machine-outil (10) respectivement un orifice (32, 47) en vue de l'introduction d'une extrémité (39) d'un convoyeur de copeaux (38).
